# EUROPEAN PATENT SPECIFICATION

(11) **EP 4 362 053 B1**
(45) Date of publication and mention of the grant of the patent: **06.08.2025**
(21) Application number: 23306565.5
(22) Date of filing: 21.09.2023
(51) Int. Cl.: H01H 33/59

(54) **DIRECT CURRENT CIRCUIT BREAKER HANDCART AND DIRECT CURRENT SWITCH APPARATUS**
HANDWAGEN EINES GLEICHSTROMSCHUTZSCHALTERS UND GLEICHSTROMSCHUTZVORRICHTUNG
DISJONCTEUR À COURANT CONTINU MANUEL ET APPAREIL DE COMMUTATION À COURANT CONTINU

(30) Priority: 28.10.2022 CN 202211337900
(43) Date of publication of application: 01.05.2024
(73) Proprietor: SCHNEIDER ELECTRIC INDUSTRIES SAS, 92500 Rueil-Malmaison (FR)
(72) Inventor: WU, Hongwei, Shanghai, 201203 (CN); WANG, Gang, Shanghai, 201203 (CN); HUANG, Haibo, Shanghai, 201203 (CN); TU, Zhanwei, Shanghai, 201203 (CN); WU, Bingchang, Shanghai, 201203 (CN); WU, Dabin, Shanghai, 201203 (CN); LEI, Xiaoqiang, Shanghai, 201203 (CN); LI, Min, Shanghai, 201203 (CN); CHEN, Jiang, Shanghai, 201203 (CN)
(74) Representative: Manitz Finsterwald Patent- und Rechtsanwaltspartnerschaft mbB

(56) References cited:
- EP-A1- 4 068 326
- CN-A- 114 640 051

## Description

### RELATED APPLICATION

The present application claims the priority of the Chinese patent application No. 202211337900.6 filed on October 28, 2022.

### TECHNICAL FIELD

At least one embodiment of the present disclosure relates to a direct current circuit breaker handcart and a direct current switch apparatus.

### BACKGROUND

Generally, a direct current switch cabinet is also called a direct current cabinet, is a kind of power distribution equipment that provides stable direct current power supply for electrical equipment, also serves as an operating power supply and a signal alarm equipment, and can provide stable power supply for a large and complex high and low voltage power distribution system. A traditional direct current switch cabinet is provided with a plurality of control elements that are separated from each other, and these control elements can monitor and deal with a power supply failure caused by breaking off of a power supply element, overcharging of a charging element, and the like. Designing a direct current switch apparatus with convenient operation and high reliability performance is the key to realize effective monitoring and maintenance for each power supply element.

EP 4 068 326 A1 discloses a direct-current circuit breaker. This direct-current circuit breaker has a mechanical circuit breaker, a surge arrester, and a commutation circuit. The mechanical circuit breaker is connected to a first direct-current transmission line at a first end thereof and to a second direct-current transmission line at a second end thereof. The commutation circuit has a first switch, a second switch, a reactor, a capacitor, and a resistor. The commutation circuit, the surge arrester, and the mechanical circuit breaker are parallelly connected between the first direct-current transmission line and the second direct-current transmission line. The first switch, the capacitor, and the reactor are serially connected between the first direct-current transmission line and the second direct-current transmission line. The second switch and the resistor are serially connected and disposed in parallel with the first switch.

CN 114 640 051 A discloses a current breaking structure of a direct-current current limiter and a quick switching handcart thereof. A handcart for quickly opening and closing a DC current limiter, there is a quick mechanical switch used as the main through-flow branch to realize normal through-flow, the quick mechanical switch includes an opening and closing fracture and an operating mechanism used to drive the opening and closing fracture to open and close, there are contact arms on both ends of the opening and closing fracture, which are respectively the first contact arm and the second contact arm. The quick switch handcart is also provided with a fuse used as a transfer branch, and the fuse is connected between the first contact arm and the second contact arm in parallel for short-circuit current to enter and realizes current limiting and breaking of the short-circuit current when the fuse is fused.

### SUMMARY

It is an object of the present invention to provide a direct current circuit breaker handcart and a direct current switch apparatus. The object is achieved by the features of the respective independent claims. Further embodiments are defined in the corresponding dependent claims.

### BRIEF DESCRIPTION OF DRAWINGS

In order to clearly illustrate the technical solution of the embodiments of the present disclosure, the drawings of the embodiments will be briefly described in the following; it is obvious that the described drawings are only related to some embodiments of the present disclosure and thus are not limitative of the present disclosure.
FIG. 1 is a perspective view of a direct current circuit breaker handcart provided by at least one embodiment of the present disclosure.
FIG. 2 is another perspective view of the direct current circuit breaker handcart provided by at least one embodiment of the present disclosure.
FIG. 3 is a perspective view of a direct current circuit breaker handcart without carrying elements provided by at least one embodiment of the present disclosure.
FIG. 4 is a perspective view of a support frame provided by at least one embodiment of the present disclosure.
FIG. 5 is a perspective view of a main circuit breaker provided by at least one embodiment of the present disclosure.
FIG. 6 is a perspective view of an auxiliary circuit breaker provided by at least one embodiment of the present disclosure.
FIG. 7A is a connection wiring diagram of a direct current circuit breaker handcart provided by at least one embodiment of the present disclosure.
FIG. 7B is a connection wiring diagram of a direct current circuit breaker handcart.
FIG. 8 is a perspective view of an energy absorbing element provided by at least one embodiment of the present disclosure.
FIG. 9 is a perspective view of a lifting frame provided by at least one embodiment of the present disclosure.
FIG. 10 is a perspective view of a direct current circuit breaker handcart provided with a lifting frame provided by at least one embodiment of the present disclosure.
FIG. 11 is a perspective view of a direct current switch apparatus provided by at least one embodiment of the present disclosure.

### DETAILED DESCRIPTION

In order to make objectives, technical details and advantages of the embodiments of the disclosure more clear, the technical solutions of the embodiments will be described in a clearly and fully understandable way in connection with the drawings related to the embodiments of the present disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present application for invention, are not intended to indicate any sequence, amount or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects.

The features such as "vertical", "parallel" and "same" used in the embodiments of the present disclosure all include features such as "vertical", "parallel" and "same" in a strict sense, as well as cases where "approximately vertical", "approximately parallel" and "approximately same" contain certain errors, considering the measurement and the errors related to the measurement of a specific quantity (that is, limitations of measurement system), the wording of approximately is within the acceptable deviation range for a specific value determined by a person of ordinary skill in the art. The "center" in the embodiment of the present disclosure may include a strictly geometric center position and a roughly central position in a small area around the geometric center. For example, "approximately" may indicate within one or more standard deviations, or within 10% or 5% of the stated value.

With continuous upgrading and optimization of the power grid system, advantages of flexible direct current power transmission as a new type of direct current power transmission technology have become increasingly prominent, and a supporting direct current switch apparatus of the flexible direct current power transmission has also gradually emerged. For example, the direct current switch apparatus may include a direct current switch cabinet. For example, in a direct current switch cabinet, the direct current switch cabinet usually includes a plurality of elements such as a breaker, a charger, a capacitor, an inductor, and a switch controller, and the like, the elements are integrated together according to a specific topology circuit to realize detection, control and maintenance for a direct current power supply system.

During research, inventor(s) of the present application found that, compared with the alternating current switch cabinet, a structure of an existing direct current switch cabinet is more complicated. A number of main elements in the direct current switch cabinet is greater than that in the alternating current switch cabinet, so an overall volume of the direct current switch cabinet is larger. In addition, the direct current switch cabinet in the market is a fixed-type cabinet, that is, respective elements are directly installed in the direct current switch cabinet, upon assembling, transporting, overhauling and maintaining the elements, an overhaul person need to enter into the direct current switch cabinet for operation, which makes the operation inconvenient and may bring lacking of reliability risks.

At least one embodiment of the present disclosure provides a direct current circuit breaker handcart and a direct current switch apparatus.

The direct current circuit breaker handcart provided by at least one embodiment of the present disclosure includes a support frame, a current carrying element, a commutation element, and an energy absorbing element. The support frame includes a support surface. The current carrying element is located on the support surface and includes a main circuit breaker and an auxiliary circuit breaker that are electrically connected with each other. The commutation element is located on the support surface, is electrically connected with the current carrying element and the commutation element, and includes a commutation capacitor, a commutation inductor, a commutation switch assembly, and a commutation capacitor charger that are electrically connected with each other. A repulsive assembly is configured to control opening and breaking off of the main circuit breaker. The energy absorbing element is located on the support surface and is electrically connected with the current carrying element.

The direct current circuit breaker handcart provided by at least one embodiment of the present disclosure can facilitate the assembly, transportation, inspection and maintenance of a plurality of elements in the direct current cabinet by integrating main elements in a direct current handcart, which effectively improves control convenience and reliability performance of the direct current cabinet.

The direct current circuit breaker handcart and the direct current switch apparatus will be described below with reference to the accompanying drawings and some embodiments.

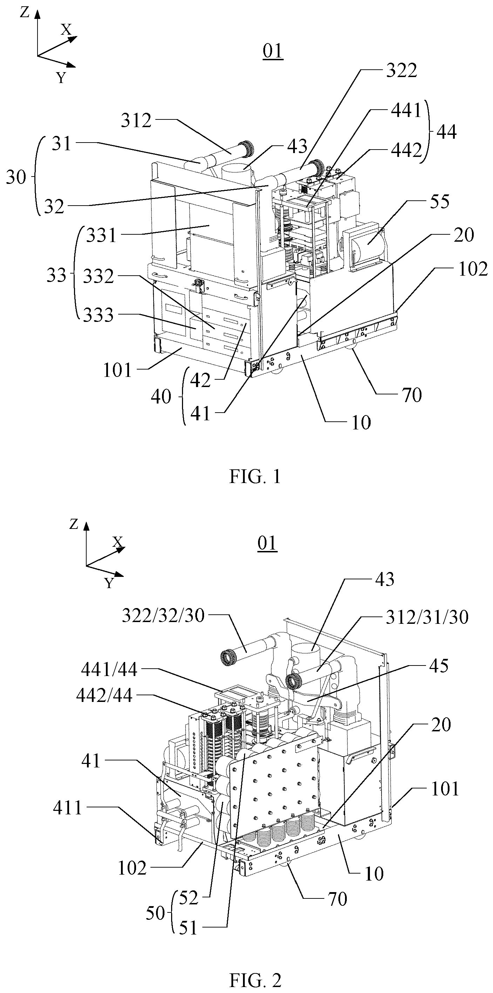

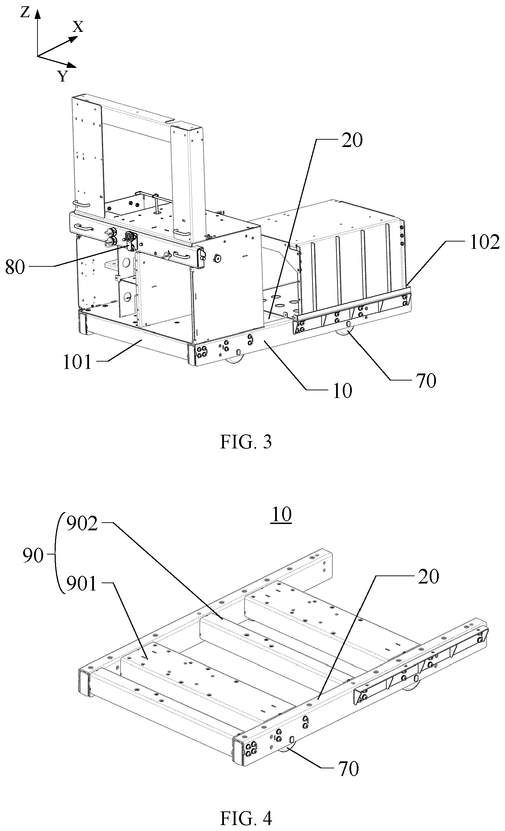

FIG. 1 is a perspective view of a direct current circuit breaker handcart provided by at least one embodiment of the present disclosure. FIG. 2 is another perspective view of the direct current circuit breaker handcart provided by at least one embodiment of the present disclosure. FIG. 3 is a perspective view of a direct current circuit breaker handcart without carrying elements provided by at least one embodiment of the present disclosure. FIG. 4 is a perspective view of a support frame provided by at least one embodiment of the present disclosure.

Referring to FIG. 1 and FIG. 2, the direct current circuit breaker handcart 01 includes a support frame 10, a current carrying element 30, a commutation element 40, a repulsive assembly 33 and an energy absorbing element 50.

Referring to FIG. 1 and FIG. 3, the support frame 10 can be used as a transport carrier for the direct current circuit breaker handcart 01. For example, the support frame 10 can be designed to be movable, so as to facilitate moving each element to a position convenient for operation in a practical application. For example, some fixed frames can further be arranged on the support frame 10 according to actual needs, so as to facilitate placement and fixing for the elements. For example, some movable frames can further be designed on the support frame 10, so as to facilitate extraction and re retraction of the elements arranged thereon. For example, the movable frame can be drawer-type, but it is not limited to this. Embodiments of the present disclosure do not limit a specific structure of the support frame 10.

Referring to FIG. 3 and FIG. 4, the support frame 10 may be a chassis structure, and the support surface 20 may be a surface of the chassis structure and may be at a side of the chassis structure close to the plurality of elements. The plurality of elements can be loaded on the support surface 20. For example, the support surface 20 may not be a plane in the strict sense. For example, the support surface 20 may have a certain degree of undulation, but it is not limited to this. For example, the chassis structure may be plate-shaped or partially hollow frame, and the embodiments of the present disclosure does not limit a material and a specific shape of the support frame 10.

Referring to FIG. 1, the current carrying element 30 is located on the support surface 20 and includes a main circuit breaker 31 and an auxiliary circuit breaker 32 that are electrically connected with each other. The repulsive assembly 33 is configured to control opening and breaking off of the main circuit breaker 31. For example, the main circuit breaker 31 is connected in series with the auxiliary circuit breaker 32. The main circuit breaker 31 is configured to quickly break a line fault and the auxiliary circuit breaker 32 is configured to cut off an entire line at last.

Referring to FIG. 1, the commutation element 40 is located on the support surface 20, is electrically connected with the current carrying element 30, and includes a commutation capacitor 41, a commutation inductor 43, a commutation switch assembly 44, and a commutation capacitor charger 42 that are electrically connected with each other. For example, the commutation capacitor 41, the commutation switch assembly 44, and the commutation inductor 43 can be connected in series in sequence, and a branch formed is connected in parallel at two ends of the main circuit breaker 31. For example, the commutation capacitor charger 42 is configured to charge the commutation capacitor 41, but it is not limited to this.

Referring to FIG. 2, the energy absorbing element 50 is located on the support surface 20 and is electrically connected with the current carrying element 30 and the commutation element 40, respectively. For example, the energy absorbing element 50 may include elements such as an arrester and a varistor to absorb residual energy after breaking off a line fault, but it is not limited to this. For example, the energy absorbing element 50 may include a main arrester 51 and a commutation switch arrester 52, the main arrester 51 is configured to absorb system energy after the opening of the main circuit breaker 31, and reduce voltage impact on the main circuit breaker 31, and the commutation switch arrester 52 is configured to reduce voltage impact on the commutation switch assembly 44.

Therefore, the embodiments of the present disclosure integrate the main elements of the direct current cabinet on the direct current circuit breaker handcart 01, which can facilitate the assembly, transportation, inspection, and maintenance of a plurality of elements in the direct current cabinet, and effectively improves control convenience and reliability performance of the direct current cabinet.

Furthermore, because of a large number of elements in the direct current cabinet, the embodiments of the present disclosure rationalize spatial relative positions of the elements of the direct current circuit breaker handcart under a condition of satisfying electrical connection between the elements, and the shape and the structure of the element is optimized, so that the elements have a high integration degree after being installed on the direct current circuit breaker handcart. A weight of the direct current circuit breaker handcart is reduced and an occupied space is reduced to facilitate assembly, maintenance, and replacement of various elements.

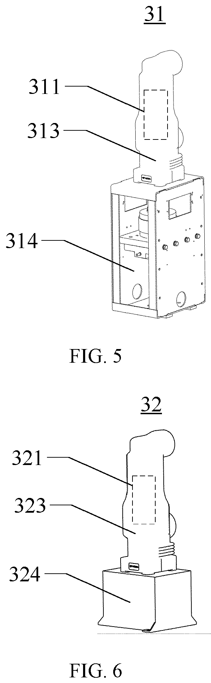

FIG. 5 is a perspective view of a main circuit breaker provided by at least one embodiment of the present disclosure. FIG. 6 is a perspective view of an auxiliary circuit breaker provided by at least one embodiment of the present disclosure.

For example, referring to FIG. 1 and FIG. 3, the support frame 10 includes a first end 101 and a second end 102 that are opposite to each other in a first direction X. Both the main circuit breaker 31 and the auxiliary circuit breaker 32 are located at the first end 101, and are spaced apart from each other in the second direction Y. An element located at the first end 101 here refers to that most of a structure of the element is located on the support frame 10 and is close to the first end 101, and an element located at the second end 102 refers to that most of a structure of the element is located on the support frame 10 and is close to the second end 102.

For example, referring to FIG. 1 and FIG. 5, the main circuit breaker 31 includes a main switch 311 and a first contact arm 312. The main circuit breaker 31 may include an upper chamber 313 and a lower chamber 314 that are communicated with each other in a third direction Z, the main switch 311 is located in the upper chamber 313, and the lower chamber 314 may further be provided with a main control mechanism for controlling opening and closing of the main switch 311. An end of the first contact arm 312 close to the first end 101 is connected with an end of the main switch 311. An end of the first contact arm 312 close to the second end 102 may include a first movable contact that is connected with the direct current cabinet.

For example, referring to FIG. 1 and FIG. 6, the auxiliary circuit breaker 32 includes an auxiliary switch 321 and a second contact arm 322. The auxiliary circuit breaker 32 may include an upper chamber 323 and a lower chamber 324 that are communicated with each other in the third direction Z, the auxiliary switch 321 is located in the upper chamber 323, and the lower chamber 324 may further be provided with an auxiliary control mechanism for controlling opening and closing of the auxiliary switch 321. An end of the second contact arm 322 close to the first end 101 is connected with an end of the auxiliary switch 321. An end of the second contact arm 322 close to the second end 102 may include a second movable contact that is connected with the direct current cabinet. Both the first contact arm 312 and the second contact arm 322 extend in the first direction X and in a direction pointing from the first end 101 to the second end 102.

For example, referring to FIG. 2, FIG. 5 and FIG. 6, the other end of the main switch 311 is electrically connected with the other end of the auxiliary switch 321 through a conductive element 45, and the first contact arm 312 and the second contact arm 322 are both farther away from the support surface 20 in a third direction Z than the conductive element 45. Therefore, a space between the first contact arm 312 and the support surface 20 and a space between the second contact arm 322 and the support surface 20 can be reserved for placing other elements. For example, the conductive element 45 can be a copper bar, but it is not limited to this.

For example, referring to FIG. 2, the first direction X and the second direction Y are both parallel to the support surface 20, and the first direction X is perpendicular to the second direction Y, the third direction Z is perpendicular to the first direction X, and the third direction Z is perpendicular to the second direction Y.

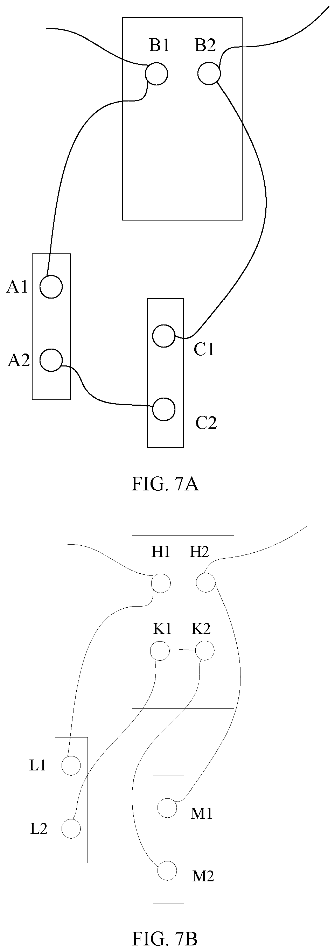

FIG. 7A is a connection wiring diagram of a direct current circuit breaker handcart provided by at least one embodiment of the present disclosure. FIG. 7B is a connection wiring diagram of a direct current circuit breaker handcart.

For example, referring to FIG. 2 and FIG. 7A, in a mode one, the direct current cabinet includes a first static contact and a second static contact, a connection end corresponding to the first static contact is B1, and a connection end corresponding to the second static contact is B2. A connection end corresponding to the first movable contact of the first contact arm 312 is A1, and a corresponding connection end in a case where the main circuit breaker 31 is connected with the conductive element 45 is A2. A corresponding connection end of the second movable contact of the second contact arm 322 is C1, and a corresponding connection end in a case where the auxiliary circuit breaker 32 is connected with the conductive element 45 is C2. For example, when the direct current circuit breaker handcart 01 enters into the direct current cabinet, the first movable contact and the second movable contact can be respectively connected with the corresponding first static contact and the second static contact in the direct current cabinet, so that the main switch 311 of the main circuit breaker 31 and the auxiliary switch 321 of the auxiliary circuit breaker 32 can be closed (with reference to FIG. 5 and FIG. 6). At this time, a path is formed by sequentially connecting the first static contact, the first movable contact, the main switch 311, the conductive element 45, the auxiliary switch 321, the second movable contact, and the second static contact (that is, a path formed by B1-A1-A2-C2-C1-B2 is connected), and the path is connected with a main loop of the direct current cabinet.

For example, referring to FIG. 2 and FIG. 7B, in a mode two, the direct current cabinet includes a connection end H1 corresponding to a first static contact, a connection end H2 corresponding to a second static contact, a connection end K1 corresponding to a third static contact, and a connection end K2 corresponding to a fourth static contact. The main switch includes a connection end L1 corresponding to a first movable contact and a connection end L2 corresponding to a third movable contact, and the auxiliary switch includes a connection end M1 corresponding to a second movable contact and a connection end M4 corresponding to a fourth movable contact. For example, when the direct current circuit breaker handcart enters into the direct current cabinet, the first movable contact and the second movable contact can be respectively connected with corresponding first static contact and the second static contact in the direct current cabinet, and the third movable contact and the fourth movable contact can be respectively connected with corresponding third static contact and fourth static contact in the direct current cabinet, so that the main switch and the auxiliary switch can be closed. At this time, a path is formed by sequentially connecting the first static contact, the first movable contact, the main switch, the third movable contact, the third static contact, the fourth static contact, the fourth movable contact, the auxiliary switch, the second movable contact, and the second static contact (that is, a path formed by H1-L1-L2-K1-K2-M2-M1-H2 is connected), and the path is connected with the main loop of the direct current cabinet.

For example, referring to FIG. 2 and FIG. 7A, the embodiments of the present disclosure adopts a connection method in mode one. Compared with the mode two, this connection method realizes a circuit connection between an end of the main circuit breaker 31 away from the direct current cabinet and an end of the auxiliary circuit breaker 32 away from the direct current cabinet by the conductive element 45. The main circuit breaker 31 and the auxiliary circuit breaker 32 each can be connected with only one contact arm, so that a size of the direct current circuit breaker handcart 01 in the first direction X can be shortened, and a plurality of elements can be arranged between the first contact arm 312 and the support surface 20, or between the second contact arm 322 and the support surface 20, so as to improve a space utilization rate of the direct current circuit breaker handcart 01.Moreover, the connection structure of the circuit in this connection method is simple and easy to implement.

For example, referring to FIG. 1, in the direct current circuit breaker handcart 01, the commutation capacitor 41 is electrically connected with the commutation capacitor charger 42, and both of the commutation capacitor 41 and the commutation capacitor charger 42 are located on a side of the main circuit breaker 31 close to the auxiliary circuit breaker 32 in the second direction Y. The commutation capacitor charger 42 is located at the first end 101 and is on a side of the auxiliary circuit breaker 32 close to the support surface 20.

For example, referring to FIG. 1, the commutation capacitor 41 is located at the second end 102, and is located on a side of the auxiliary circuit breaker 32 close to the support surface 20, and an orthographic projection of the commutation capacitor 41 on the support surface 20 at least partially overlaps with an orthographic projection of the main circuit breaker 31 on the support surface 20. For example, the orthographic projection of the commutation capacitor 41 on the support surface 20 at least partially overlaps with an orthographic projection of the auxiliary circuit breaker 32 on the support surface 20. For another example, the orthographic projection of the commutation capacitor 41 on the support surface 20 at least partially overlaps with both of the orthographic projection of the main circuit breaker 31 on the support surface 20 and the orthographic projection of the auxiliary circuit breaker 32 on the support surface 20.

For example, referring to FIG. 1, a size of the commutation capacitor 41 and a size of the commutation capacitor charger 42 in the second direction Y are both smaller than a size of the direct current circuit breaker handcart 01 in the second direction Y, and both of the commutation capacitor 41 and the commutation capacitor charger 42 are located on the same side of the direct current circuit breaker handcart 01 in the second direction Y, which is beneficial for the commutation capacitor charger 42 to charge the commutation capacitor 41.

For example, referring to FIG. 1, in a case where the commutation capacitor charger 42 is located at the first end 101, the control and the maintenance can be facilitated. For example, the orthographic projection of the commutation capacitor 41 on the support surface 20 at least partially overlaps with the orthographic projection of the main circuit breaker 31 on the support surface 20. For example, the orthographic projection of the commutation capacitor 41 on the support surface 20 at least partially overlaps with the orthographic projection of the auxiliary circuit breaker 32 on the support surface 20. For example, the orthographic projection of the commutation capacitor 41 on the support surface 20 at least partially overlaps with the orthographic projection of the main circuit breaker 31 on the support surface 20 and the orthographic projection of the auxiliary circuit breaker 32 on the support surface 20. In this way, a space between the main circuit breaker 31 and the support surface 20 and a space between the auxiliary circuit breaker 32 and the support surface 20 can be effectively utilized, so that a space structure of the direct current circuit breaker handcart 01 is more compact.

For example, referring to FIG. 2, the commutation capacitor 41 is roughly in a shape of a cuboid and includes two parts arranged by stacking. One end of the commutation capacitor 41 can be connected with both of one end of the main circuit breaker 31 and one end of the main arrester 51, and the other end of the commutation capacitor 41 can be connected with the commutation switch assembly 44 and the commutation switch arrester 52 (with reference to FIG. 2). In the embodiments of the present disclosure, because the commutation capacitor 41 needs to be connected with a plurality of elements, two ends of the commutation capacitor 41 opposite in the first direction X are respectively provided with four connection ends, which is beneficial for the commutation capacitor 41 to electrically connected with other elements, so that a plurality of lines connected with the commutation capacitor 41 can maintain relative independence and reduce mutual crosstalk. Of course, a number of connection ends of the commutation capacitor 41 provided in the embodiments of the present disclosure is only exemplary, and in different application scenarios, the number can be determined according to different needs, which is not limited in the embodiments of the present disclosure. For example, the commutation capacitor 41 can further only be provided with several connection ends on one side, and on the other side, the commutation capacitor 41 can be electrically connected with other elements by directly leading out connection lines (for example, an electric line), and therefore the space can be further saved, and the convenience of electrical connection can be satisfied, but it is not limited to this.

For example, referring to FIG. 2, because the commutation capacitor 41 has a high voltage and a large capacitance, it may cause life danger upon being touched by a person. For this, the embodiments of the present disclosure is further provided with two discharge connection terminals 411 on a side of the commutation capacitor 41 close to the second end 102, the discharge connection terminal 411 extends in a direction toward a side close to the support surface 20 and is configured to connected with a discharge element (for example, a discharge resistor) in the direct current cabinet, so as to facilitate a discharge of the commutation capacitor 41 to improve reliability performance.

For example, referring to FIG. 1 and FIG. 2, the commutation inductor 43 is located on a side of the commutation capacitor charger 42 away from the support surface 20 in the third direction Z, and is located between the main circuit breaker 31 and the auxiliary circuit breaker 32 in the second direction Y. The commutation inductor 43 is roughly cylindrical, and is surrounded by the conductive element 45 on a side of the conductive element 45 away from the second end 102 when the conductive element 45 is connected with the main circuit breaker 31 and the auxiliary circuit breaker 32, so that the commutation inductor 43 is arranged stably, is not easy to shake or fall, and is easy to realize electrical connection with the commutation capacitor 41.

For example, referring to FIG. 1, the direct current circuit breaker handcart 01 further includes an isolation transformer 55. The isolation transformer 55 is electrically connected with the commutation switch assembly 44, and is located on a side of the commutation capacitor 41 away from the support surface 20, and is adjacent to and spaced apart from the commutation switch assembly 44. For example, a volume of the isolation transformer 55 is smaller and is smaller than that of the commutation switch assembly 44. With this arrangement, a space between the commutation capacitor 41 and the commutation switch assembly 44 can be effectively utilized, and an electrical connection between the isolation transformer 55 and the commutation switch assembly 44 is facilitated.

For example, referring to FIG. 1, the isolation transformer 55 can be connected in parallel at both ends of the commutation switch assembly 44, and can further be connected with an external power source, to supply power to the commutation switch assembly 44. For example, a power supply voltage of the commutation switch assembly 44 can be 220V, and the arrangement of the isolation transformer 55 may use a principle of electromagnetic induction to prevent excessive voltage on a power supply side from entering the commutation switch assembly 44 and causing damage to the elements. For example, the isolation transformer 55 can prevent the voltage of 10 KV and above from the power supply side from entering the commutation switch assembly 44, but it is not limited to this.

For example, referring to FIG. 1, the commutation switch assembly 44 is electrically connected with the commutation inductor 43 and the commutation capacitor 41, respectively, and the commutation switch assembly 44 includes a first commutation switch assembly 441 and a second commutation switch assembly 442. The first commutation switch assembly 441 and the second commutation switch assembly 442 are electrically connected with each other, and are both located on a side of the commutation capacitor 41 away from the support surface 20.

For example, referring to FIG. 1, each of the first commutation switch assembly 441 and the second commutation switch assembly 442 is of an integral structure. In the third direction Z, the first commutation switch assembly 441 and the second commutation switch assembly 442 are located between the support surface 20 and the first contact arm 312, and are between the support surface 20 and the second contact arm 322.

For example, referring to FIG. 1, the commutation capacitor 41, the commutation switch assembly 44, and the commutation inductor 43 can be connected in series in sequence, and this connection branch can be connected in parallel with the main circuit breaker 31, and is configured to generate an oscillation loop and form a current zero-crossing point upon breaking off the line fault. For example, the first commutation switch assembly 441 may include a commutation switch IGCT (Integrated Gate Commutated Thyristor) assembly, the second commutation switch assembly 442 may include a commutation switch thyristor assembly, and the first commutation switch assembly 441 is connected in series with the second commutation switch assembly 442, but it is not limited to this.

For example, referring to FIG. 1, with this arrangement, it is beneficial to realizing an electrical connection among the first commutation switch assembly 441, the second commutation switch assembly 442, the commutation inductor 43, and the commutation capacitor 41. By arranging the first commutation switch assembly 441 and the second commutation switch assembly 442 of an integrated structure, it is beneficial to realizing a miniaturized design and reducing an occupied space. In addition, the first commutation switch assembly 441 and the second commutation switch assembly 442 can be placed by further effectively use the space between the support surface 20 and the first contact arm 312 and the space between the support surface 20 and the second contact arm 322, thereby making a layout of the direct current circuit breaker handcart 01 more reasonable.

For example, referring to FIG. 2, both the first commutation switch assembly 441 and the second commutation switch assembly 442 are in a shape of cuboid or substantially cuboid, but it is not limited to this. In the third direction Z, an orthographic projection of the second commutation switch assembly 442 on the support surface 20 is in a shape of "I". For example, the orthographic projection of the second commutation switch assembly 442 on the support surface 20 extends in a direction from the first end 101 to the second end 102. In this way, compared with making the orthographic projection of the second commutation switch assembly 442 on the support surface 20 be in other shapes, such as an "L" shape, an overall volume of the second commutation switch assembly 442 is reduced, which is conducive to the miniaturized design. In this case, a sum of a size of the first commutation switch assembly 441 and a size of the second commutation switch assembly 442 in the first direction X is approximately equal to a size of the commutation capacitor 41 in the first direction X. The size of the first commutation switch assembly 441 in the second direction Y is greater than the size of the second commutation switch assembly 442 in the second direction Y, and the size of the first commutation switch assembly 441 in the second direction Y is approximately equal to that of the commutation capacitor 41, which is beneficial to achieving a good overall arrangement of the direct current circuit breaker handcart 01.

For example, referring to FIG. 1, in the direct current circuit breaker handcart 01, the repulsive assembly 33 includes a repulsive capacitor 331 and a repulsive capacitor charger 332, the repulsive capacitor charger 332 is electrically connected with the repulsive capacitor 331, and is configured to charge the repulsive capacitor 331. For example, the repulsive assembly 33 may further include a repulsive switch thyristor assembly 333 configured to control a rapid opening of the main circuit breaker 31 together with the circuit breaker controller (with reference to related description of the following embodiments) when a line fault occurs. For example, a volume of the repulsive capacitor 331 is larger than that of the repulsive capacitor charger 332, but it is not limited to this. For example, the repulsive switch thyristor assembly 333 can be located in the main circuit breaker 31, but it is not limited to this.

For example, referring to FIG. 1, both the repulsive capacitor 331 and the repulsive capacitor charger 332 are located at the first end 101, and are located on the side of the main circuit breaker 31 close to the auxiliary circuit breaker 32 in the second direction Y. The repulsive capacitor 331 is located on a side of the repulsive capacitor charger 332 away from the support surface 20, and is spaced apart from the auxiliary circuit breaker 32 in the first direction X, so as to facilitate a charging of the repulsive capacitor 331 by the repulsive capacitor charger 332. Meanwhile, the repulsive capacitor charger 332 is located on the side of the auxiliary circuit breaker 32 close to the support surface 20 in the third direction Z, with this arrangement, it is beneficial to a control and maintenance for the repulsive capacitor charger 332.

For example, referring to FIG. 1, the direct current circuit breaker handcart 01 further includes a circuit breaker controller (not shown), which is configured to transmit a control signal to the main circuit breaker 31 and the auxiliary circuit breaker 32. The circuit breaker controller is located at the first end 101, and is located on a side of the main circuit breaker 31 close to the support surface 20 in the third direction Z, and is adjacent to and spaced apart from the repulsive capacitor charger 332 in the second direction Y. For example, the circuit breaker controller is located on a side of the repulsive capacitor charger 332 close to the second end 102 in the first direction, but it is not limited to this.

For example, referring to FIG. 1, a volume of the circuit breaker controller may be smaller than that of the repulsive capacitor charger 332 adjacent thereto, but it is not limited to this. By arranging the circuit breaker controller at the first end 101, it is convenient to realize a control of the circuit breaker controller to the main circuit breaker 31 and the auxiliary circuit breaker 32, and to facilitate a control and maintenance for the circuit breaker controller.

For example, referring to FIG. 1, in some embodiments of the present disclosure, the circuit breaker controller may include a main circuit breaker controller and an auxiliary circuit breaker controller. For example, the main circuit breaker controller can control the opening and closing of the main circuit breaker 31 together with the repulsive switch thyristor assembly 333. For example, the auxiliary circuit breaker controller may control the opening and closing of the auxiliary circuit breaker 32. For example, the main circuit breaker controller may be a main circuit breaker permanent magnet controller, and the auxiliary circuit breaker controller may be an auxiliary circuit breaker permanent magnet controller.

For example, referring to FIG. 1, a repulsive mechanism may further be provided in the main circuit breaker 31, and the repulsive mechanism may be electrically connected with the repulsive assembly 33 in the above embodiments, and together control the opening of the main circuit breaker 31. For example, the repulsive mechanism may include a repulsive coil and a repulsive disk, but it is not limited to this. For example, when a line fault occurs, a control and protection system of the direct current cabinet will send an opening command, and the repulsive switch thyristor assembly 333 will control the repulsive capacitor 331 to discharge to the repulsive coil located in the main circuit breaker 31, so that the repulsive coil controls the repulsive disk to drive the main circuit breaker 31 to open, for example, to drive the main switch 311 (with reference to FIG. 5) in the main circuit breaker 31 to break off. At the same time, a permanent magnet capacitor inside the main circuit breaker controller discharges to a permanent magnet coil, so as to drive the main circuit breaker 31 to open. Therefore, the main switch 311 (with reference to FIG. 5) in the main circuit breaker 31 can be broken off under a joint action of a repulsive coil controller and the main circuit breaker controller. For example, a permanent magnet capacitor inside the auxiliary circuit breaker controller discharges to a permanent magnet coil, so as to drive the auxiliary circuit breaker 32 to open. Therefore, the auxiliary switch 321 (with reference to FIG. 6) in the auxiliary circuit breaker 32 can be broken off under an action of the auxiliary circuit breaker controller. For example, when the control and protection system of the direct current cabinet sends a closing command, the main switch 311 (with reference to FIG. 5) in the main circuit breaker controller can be closed under an action of the main circuit breaker controller, and the auxiliary switch 321 in the auxiliary circuit breaker 32 (with reference to FIG. 6) can be closed under the action of the auxiliary circuit breaker controller, but is not limited to this.

For example, referring to FIG. 2, in the energy absorbing element 50, the main arrester 51 is connected with the commutation switch arrester 52 to form an integrated structure, and is located at the second end 102, and is located at a side of the commutation capacitor 41 close to the main circuit breaker 31 in the second direction Y. The energy absorbing element 50 is located between the support surface 20 and the main circuit breaker 31 in the third direction Z.

For example, referring to FIG. 2, the commutation capacitor 41 is connected in series with the first commutation switch element 441 and the second commutation switch element 442 in sequence. For example, in this circuit connection relationship, one end of the main arrester 51 can be connected with an end of the commutation capacitor 41 away from the commutation switch assembly 44, and the other end of the main arrester 51 is connected with an end of the second commutation switch assembly 442 away from the commutation capacitor 41. The commutation switch arrester 52 is connected in parallel to both ends of the commutation switch assembly 44, for example, one end of the commutation switch arrester 52 is connected with an end of the commutation switch assembly 44 close to the commutation capacitor 41, and the other end of the commutation switch arrester 52 is connected with the end of the second commutation switch assembly 442 away from the commutation capacitor 41.

With this arrangement, it is beneficial to realizing an electrical connection between the main arrester 51 and the commutation switch arrester 52 and various elements. Meanwhile, the main arrester 51 and the commutation switch arrester 52 are designed as an integrated structure, which is beneficial to reducing the occupied space and effectively utilizing a space between the support surface 20 and the main circuit breaker 31.

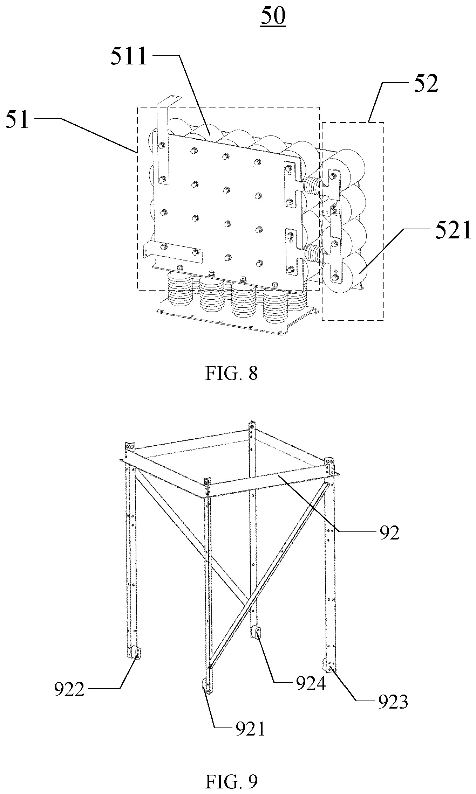

FIG. 8 is a perspective view of an energy absorbing element provided by at least one embodiment of the present disclosure.

For example, referring to FIG. 2 and FIG. 8, the main arrester 51 includes a plurality of main arrester units 511 that are electrically connected with each other. The plurality of main arrester units 511 are arranged in an array in the first direction X and the third direction Z to form a plurality of main arrester unit rows and a plurality of main arrester unit columns.

For example, referring to FIG. 2 and FIG. 8, the commutation switch arrester 52 further includes a plurality of commutation switch arrester units 521 that are electrically connected with each other. The plurality of commutation switch arrester units 521 are located on a side of the plurality of main arrester units 511 away from the main circuit breaker 31, and the plurality of commutation switch arrester units 521 are arranged in the third direction Z to form a commutation switch arrester unit columns.

For example, referring to FIG. 2 and FIG. 8, a size of the main arrester unit 511 in the second direction Y may be the same or substantially the same as a size of the commutation switch arrester unit 521 in the second direction Y, but it is not limited to this. For example, the main arrester 51 and the commutation switch arrester 52 can be metal oxide variable resistor type arresters, the plurality of the main arrester units 511 can be connected in parallel with each other, and the plurality of the commutation switch arrester units 521 can further be connected in parallel with each other, but it is not limited to this. A side of the plurality of main arrester units 511 away from the main circuit breaker 31 is electrically connected with the plurality of commutation switch arrester units 521 to form a common electrode, and the common electrode can be connected with, for example, the second commutation switch assembly 442 of the commutation switch assembly 44.

For example, referring to FIG. 2 and FIG. 8, the plurality of the main arrester units 511 and the plurality of the commutation switch arrester units 521 are arranged in this manner, which is beneficial to reducing a size of the direct current circuit breaker handcart 01 in the second direction Y, realizing a reasonable layout with other elements in the direct current circuit breaker handcart 01, and meanwhile further be convenient for electrical connection with adjacent elements.

For example, referring to FIG. 1 and FIG. 3, the direct current circuit breaker handcart 01 further includes a moving part 70. The moving part 70 is located on a side of the support surface 20 away from the current carrying element 30, the commutation element 40, and the energy absorbing element 50 (with reference to FIG. 2), and the moving part 70 is configured to drive the support frame 10 to move.

For example, referring to FIG. 1 and FIG. 3, the moving part 70 may be a moving wheel set including a plurality of moving wheels so as to drive the support frame 10 to move, but it is not limited to this. For example, the moving part 70 may include 4 or 6 moving wheels, but it is not limited to this.

For example, referring to FIG. 1 and FIG. 3, the direct current circuit breaker handcart 01 further includes a moving control device 80. The moving control device 80 is connected with the support frame 10 and is configured to control the moving part 70 to drive the support frame 10 to move. For example, the moving control device 80 may be connected with the support frame 10 through a frame structure provided on the support frame 10, but it is not limited to this. For example, the moving control device 80 may further be directly connected with the support frame 10. For example, the moving control device 80 may further include a crank handle. For example, the support frame 10 can be moved by shaking the crank handle, but it is not limited to this, and the embodiments of the present disclosure does not limit a type and a specific shape of the moving control device 80.

For example, referring to FIG. 1 and FIG. 3, the moving control device 80 is located at the first end 101 of the direct current circuit breaker handcart 01, and is located on a side of the main circuit breaker 31 away from the second end 102 in the first direction X. In this way, it is beneficial to shaking the direct current circuit breaker handcart 01 into or out of the direct current cabinet through the moving control device 80, which is convenient for operation and control.

For example, referring to FIG. 3 and FIG. 4, the support frame 10 further includes at least two support beams 90. At least two support beams 90 are connected with the support surface 20. For example, the support beams 90 may have different structural forms. For example, a surface of the support beam 90 on a side away from the moving part 70 may be in or substantially in the same plane as the support surface 20, but it is not limited to this. For example, the support beam 90 may include a first support beam 901 and a second support beam 902. The support beam 90 may include two first support beams 901, which are arranged at the first end 101 and the second end 102, respectively. For example, a cross-sectional area of the second support beam 902 is smaller than a cross-sectional area of the first support beam 901, and the support beam 90 include one second support beam 902, which is located between two first support beams 901. With this arrangement, the direct current circuit breaker handcart 01 can satisfy a gravity distribution, and have good structural stability.

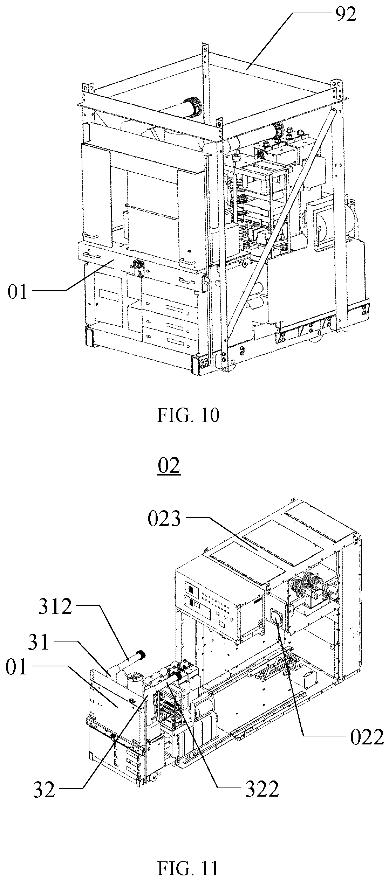

FIG. 9 is a perspective view of a lifting frame provided by at least one embodiment of the present disclosure. FIG. 10 is a perspective view of a direct current circuit breaker handcart provided with a lifting frame provided by at least one embodiment of the present disclosure.

For example, referring to FIG. 4 and FIG. 9, the direct current circuit breaker handcart 01 further includes a lifting frame 92. The lifting frame 92 is detachably connected with at least two support beams 90. For example, the lifting frame 92 includes a plurality of fixing ends, such as a fixing end 921, a fixing end 922, a fixing end 923, and a fixing end 924. The plurality of fixing ends are connected with end portions of the at least two support beams 90 of the support frame 10, respectively.

For example, referring to FIG. 9 and FIG. 10, on the direct current circuit breaker handcart 01, both sides of the same support beam are connected with two opposite fixing ends of the lifting frame 92, respectively, but it is not limited to this. Therefore, the direct current circuit breaker handcart 01 can be lifted from a top as a whole through the lifting frame 92 by a lifting equipment, which is convenient for installation and transportation.

Of course, referring to FIG. 3 and FIG. 4, in some embodiments of the present disclosure, according to different design layouts of the direct current circuit breaker handcart 01, the support beams 90 of the support frame 10 may have different structural forms, and multiple support beams 90 may further have different arrangement forms, and therefore, design forms of the lifting frame 92 (with reference to FIG. 9) can further be diversified in a case of satisfying a connection between the lifting frame 92 and the support beam 90.

FIG. 11 is a perspective view of a direct current switch apparatus provided by at least one embodiment of the present disclosure.

Referring to FIG. 11, an embodiment of the present disclosure further provides a direct current switch apparatus 02. The direct current switch apparatus 02 includes the direct current circuit breaker handcart 01 described in any one of the above embodiments and a direct current switch cabinet 023.

For example, referring to FIG. 11, the direct current switch apparatus 02 may include a plurality of independent working chambers, such as a handcart chamber for placing the direct current circuit breaker handcart 01, a cable chamber arranging with lines and cables, and an instrument chamber arranged with secondary elements for monitoring, protection and measurement, and a bus bar chamber where a main bus bar is arranged, but it is not limited to this.

Referring to FIG. 11, the direct current switch cabinet 023 includes a first static contact (not shown) and a second static contact 022, the first static contact is configured to achieve detachable connection with the main circuit breaker 31, and the second static contact 022 is configured to achieve detachable connection with the auxiliary circuit breaker 32.

For example, referring to FIG. 11, the first static contact can be arranged in the bus bar chamber and connected with the main bus bar, and the second static contact can be arranged in the bus bar chamber and connected with the lines and cables in the cable chamber. The direct current circuit breaker handcart 01 can move in and out of the handcart chamber, and is connected with the first static contact through the first contact arm 312 in the main circuit breaker 31, and is connected with the second static contact through the second contact arm 322 in the auxiliary circuit breaker 32, so as to realize a connection of a whole loop. For example, the first movable contact at one end of the first contact arm 312 may be a tulip contact, and the second movable contact at one end of the second contact arm 322 may further be a tulip contact, but it is not limited to this. For example, both the first static contact and the second static contact 022 may be cylindrical contacts, but it is not limited to this. For example, a sliding connection can be made between the first contact arm 312 and the first static contact, and a sliding connection can be made between the second contact arm 322 and the second static contact, but it is not limited to this.

For example, when a line fault occurs, a main working process of the direct current switch apparatus 02 includes the following steps.

Referring to FIG. 1 and FIG. 11, the control and protection system of the direct current cabinet will send an opening command, and the repulsive switch thyristor assembly 333 of the repulsive assembly 33 together with the circuit breaker controller control a rapid opening of the main circuit breaker 31, the main switch (with reference to FIG. 5) of the main circuit breaker 31 is opened and an arc is formed between its electrodes. In a case where the electrodes reach a certain distance, the commutation switch assembly 44 starts to operate, the commutation capacitor 41 is connected with the current carrying element 30 through the commutation inductor 43 to form a current carrying branch as an oscillation loop, and vibration current with an opposite direction to that of current in the current carrying branch is generated, so that the arc in the main switch (with reference to FIG. 5) in the main circuit breaker 31 is extinguished because of a forced zero-crossing of the current, which makes that the current is transferred to a commutation branch formed by the commutation element 40. Subsequently, the commutation capacitor 41 is reversely charged, and in a case where a voltage of the commutation capacitor 41 exceeds an operating voltage of the main arrester (with reference to FIG. 2) in the energy absorbing element, the current is gradually transferred to a branch where the main arrester is located until the current in the main arrester crosses zero to complete a breaking off of the line fault.

What have been described above are only specific implementations of the present disclosure, and are not used to limit the protection scope of the present disclosure. The protection scope of the present disclosure should be determined by the protection scope of the claims.

## Claims

1. A direct current circuit breaker handcart, comprising:
a support frame (10), comprising a support surface (20);
a current carrying element (30), located on the support surface (20), and comprising a main circuit breaker (31) and an auxiliary circuit breaker (32) that are electrically connected with each other;
a commutation element (40), located on the support surface (20), electrically connected with the current carrying element (30), and comprising a commutation capacitor (41), a commutation inductor (43), a commutation switch assembly (44), and a commutation capacitor (41) charger that are electrically connected with each other;
a repulsive assembly (33), configured to control opening and breaking off of the main circuit breaker (31); and
an energy absorbing element (50), located on the support surface (20), and electrically connected with the current carrying element (30) and the commutation element (40), respectively;
wherein the support frame (10) comprises a first end (101) and a second end (102) that are opposite in a first direction (X), and the main circuit breaker (31) and the auxiliary circuit breaker (32) are located at the first end (101), and are spaced apart from each other in a second direction (Y), the first direction (X) and the second direction (Y) are parallel to the support surface (20), and the first direction (X) is perpendicular to the second direction (Y),
the main circuit breaker (31) comprises a main switch (311) and a first contact arm (312), the auxiliary circuit breaker (32) comprises an auxiliary switch (321) and a second contact arm (322), and the first contact arm (312) and the second contact arm (322) both extend in the first direction (X) and in a direction pointing from the first end (101) to the second end (102),
wherein one end of the first contact arm (312) close to the first end (101) is connected with one end of the main switch (311), and one end of the second contact arm (322) close to the first end (101) is connected with one end of the auxiliary switch (321), the other end of the main switch (311) is electrically connected with the other end of the auxiliary switch (321) through a conductive element (45), and both the first contact arm (312) and the second contact arm (322) are farther away from the support surface (20) in a third direction (Z) than the conductive element (45), the third direction (Z) is perpendicular to the first direction (X), and the third direction (Z) is perpendicular to the second direction (Y).

2. The direct current circuit breaker handcart according to claim 1, wherein the commutation capacitor (41) is electrically connected with the commutation capacitor charger (42), and is located on a side of the main circuit breaker (31) close to the auxiliary circuit breaker (32) in the second direction (Y),
the commutation capacitor charger (42) is located at the first end (101), and is located on a side of the auxiliary circuit breaker (32) close to the support surface (20);
the commutation capacitor (41) is located at the second end (102), and is located on a side of the auxiliary circuit breaker (32) close to the support surface (20), and an orthographic projection of the commutation capacitor (41) on the support surface (20) at least partially overlaps with an orthographic projection of at least one of the main circuit breaker (31) and the auxiliary circuit breaker (32) on the support surface (20).

3. The direct current circuit breaker handcart according to claim 1 or 2, wherein the commutation switch assembly (44) is electrically connected with the commutation inductor (43) and the commutation capacitor (41), respectively, and the commutation switch assembly (44) comprises a first commutation switch assembly (441) and a second commutation switch assembly (442),
the first commutation switch assembly (441) and the second commutation switch assembly (442) are electrically connected with each other, and are both located on a side of the commutation capacitor (41) away from the support surface (20), and the first commutation switch assembly (441) and the second commutation switch assembly (441) are each of an integrated structure,
wherein in the third direction (Z), the first commutation switch assembly (441) and the second commutation switch assembly (442) are located between the support surface (20) and the first contact arm (312), and are located between the support surface (20) and the second contact arm (322).

4. The direct current circuit breaker handcart according to claim 3, wherein the first commutation switch assembly (441) comprises a commutation switch of integrated gate commutated thyristor assembly, the second commutation switch assembly (442) comprises a commutation switch thyristor assembly, and the first commutation switch assembly (441) is connected in series with the second commutation switch assembly (442).

5. The direct current circuit breaker handcart according to any one of claims 1-4, wherein the repulsive assembly (33) comprises a repulsive capacitor (331) and a repulsive capacitor charger (332), the repulsive capacitor charger (332) is electrically connected with the repulsive capacitor (331), and the repulsive capacitor charger (332) is configured to charge the repulsive capacitor (331),
wherein both the repulsive capacitor (331) and the repulsive capacitor charger (332) are located at the first end (101), and are located on a side of the main circuit breaker (31) close to the auxiliary circuit breaker (32) in the second direction (Y), and the repulsive capacitor charger (332) is located on a side of the auxiliary circuit breaker (32) close to the support surface (20) in the third direction (Z), the repulsive capacitor (331) is located on a side of the repulsive capacitor charger (332) away from the support surface (20), and the repulsive capacitor (331) and the auxiliary circuit breaker (32) are spaced apart from each other in the first direction (X).

6. The direct current circuit breaker handcart according to claim 5, further comprising a circuit breaker controller, configured to transmit control signals to the main circuit breaker (31) and the auxiliary circuit breaker (32),
wherein the circuit breaker controller is located at the first end (101), and is located on a side of the main circuit breaker (31) close to the support surface (20) in the third direction (Z), and is adjacent to and spaced apart from the repulsive capacitor charger (332) in the second direction (Y).

7. The direct current circuit breaker handcart according to any one of claims 1-6, wherein the energy absorbing element (50) comprises a main arrester (51) and a commutation switch arrester (52), the main arrester (51) is configured to absorb system energy after opening of the main circuit breaker (31) to reduce voltage impact on the main circuit breaker (31), the commutation switch arrester (52) is configured to reduce voltage impact on the commutation switch assembly (44),
the main arrester (51) is connected with the commutation switch arrester (52) to form an integrated structure, and is located at the second end (102) and on a side of the commutation capacitor (41) close to the main circuit breaker (31) in the second direction (Y), the energy absorbing element (50) is located between the support surface (20) and the main circuit breaker (31) in the third direction (Z).

8. The direct current circuit breaker handcart according to claim 7, wherein the commutation capacitor (41), the commutation switch assembly (44), and the commutation inductor (43) are connected in series in sequence to form a connection branch, and the connection branch is connected in parallel with the main circuit breaker (31),
wherein the commutation switch arrester (52) is connected in parallel to both ends of the commutation switch assembly (44).

9. The direct current circuit breaker handcart according to claim 7 or 8, wherein the main arrester (51) comprises a plurality of main arrester (51) units electrically connected with each other, the plurality of main arrester (51) units are arranged in an array in the first direction (X) and the third direction (Z) to form a plurality of main arrester (51) unit rows and a plurality of main arrester (51) unit columns;
the commutation switch arrester (52) comprises a plurality of commutation switch arrester units (521) electrically connected with each other, the plurality of commutation switch arrester (52) units are located on a side of the plurality of main arrester (51) units away from the main circuit breaker (31), and the plurality of commutation switch arrester units (521) are arranged in the third direction (Z) to form a plurality of commutation switch arrester unit columns.

10. The direct current circuit breaker handcart according to claim 3 or 4, wherein in the third direction (Z), an orthographic projection of the second commutation switch assembly (442) on the support surface (20) is in a shape of "I".

11. The direct current circuit breaker handcart according to any one of claims 1-10, further comprising: a moving part (70), located on a side of the support surface (20) away from the current carrying element (30), the commutation element (40), and the energy absorbing element (50), wherein the moving part (70) is configured to drive the support frame (10) to move.

12. The direct current circuit breaker handcart according to claim 11, further comprising a moving control device (80), wherein the moving control device (80) is connected with the support frame (10) and is configured to control the moving part (70) so as to drive the support frame (10) to move,
wherein the moving control device (80) is located at the first end (101), and is located on a side of the main circuit breaker (31) away from the second end (102) in a first direction (X).

13. The direct current circuit breaker handcart according to claim 1, wherein the support frame (10) further comprises at least two support beams (90), the at least two support beams (90) are connected with the support surface (20);
the direct current circuit breaker handcart further comprises a lifting frame, and the lifting frame is detachably connected with the at least two support beams (90).

14. The direct current circuit breaker handcart according to any one of claims 1-13, wherein
the commutation inductor (43) is located on a side of the commutation capacitor charger (42) away from the support surface (20) in the third direction (Z), and is located between the main circuit breaker (31) and the auxiliary circuit breaker (32) in the second direction (Y);
the direct current circuit breaker handcart further comprises an isolation transformer (55), the isolation transformer (55) is electrically connected with the commutation switch assembly (44), and is located on a side of the commutation capacitor (41) away from the support surface (20), and is adjacent to and spaced apart from the commutation switch assembly (44).

15. A direct current switch apparatus, comprising the direct current circuit breaker handcart according to any one of claims 1-14, and a direct current switch cabinet (023),
wherein the direct current switch cabinet (023) comprises a first static contact and a second static contact, the first static contact is configured to be detachably connected with the main circuit breaker (31), and the second static contact is configured to be detachably connected with the auxiliary circuit breaker (32).

## Patentansprüche

1. Gleichstrom-Lasttrennschalter-Handwagen, umfassend:
einen Stützrahmen (10), der eine Stützfläche (20) umfasst;
ein stromführendes Element (30), das sich auf der Stützfläche (20) befindet und einen Haupt-Lasttrennschalter (31) und einen Hilfs-Lasttrennschalter (32) umfasst, die elektrisch miteinander verbunden sind;
ein Kommutierungselement (40), das sich auf der Stützfläche (20) befindet, elektrisch mit dem stromführenden Element (30) verbunden ist und einen Kommutierungskondensator (41), einen Kommutierungsinduktor (43), eine Kommutierungsschalteranordnung (44) und ein Ladegerät für den Kommutierungskondensator (41) umfasst, die elektrisch miteinander verbunden sind;
eine Abstoßungsanordnung (33), die konfiguriert ist, um das Öffnen und Abschalten des Haupt-Lasttrennschalters (31) zu steuern; und
ein energieabsorbierendes Element (50), das sich auf der Stützfläche (20) befindet und elektrisch mit dem stromführenden Element (30) bzw. dem Kommutierungselement (40) verbunden ist;
wobei der Stützrahmen (10) ein erstes Ende (101) und ein zweites Ende (102) umfasst, die in einer ersten Richtung (X) entgegengesetzt sind, und der Haupt-Lasttrennschalter (31) und der Hilfs-Lasttrennschalter (32) sich am ersten Ende (101) befinden und in einer zweiten Richtung (Y) voneinander beabstandet sind, wobei die erste Richtung (X) und die zweite Richtung (Y) parallel zur Stützfläche (20) sind und die erste Richtung (X) senkrecht zur zweiten Richtung (Y) ist,
der Haupt-Lasttrennschalter (31) einen Hauptschalter (311) und einen ersten Kontaktarm (312) umfasst, der Hilfs-Lasttrennschalter (32) einen Hilfsschalter (321) und einen zweiten Kontaktarm (322) umfasst und sich der erste Kontaktarm (312) und der zweite Kontaktarm (322) beide in der ersten Richtung (X) und in einer Richtung erstrecken, die vom ersten Ende (101) zum zweiten Ende (102) zeigt,
wobei ein Ende des ersten Kontaktarms (312) nahe dem ersten Ende (101) mit einem Ende des Hauptschalters (311) verbunden ist und ein Ende des zweiten Kontaktarms (322) nahe dem ersten Ende (101) mit einem Ende des Hilfsschalters (321) verbunden ist, das andere Ende des Hauptschalters (311) durch ein leitfähiges Element (45) elektrisch mit dem anderen Ende des Hilfsschalters (321) verbunden ist und sowohl der erste Kontaktarm (312) als auch der zweite Kontaktarm (322) in einer dritten Richtung (Z) weiter von der Stützfläche (20) entfernt sind als das leitfähige Element (45),
wobei die dritte Richtung (Z) senkrecht zur ersten Richtung (X) ist und die dritte Richtung (Z) senkrecht zur zweiten Richtung (Y) ist.

2. Gleichstrom-Lasttrennschalter-Handwagen nach Anspruch 1, wobei der Kommutierungskondensator (41) elektrisch mit dem Ladegerät (42) für den Kommutierungskondensator verbunden ist und sich auf einer Seite des Haupt-Lasttrennschalters (31) nahe dem Hilfs-Lasttrennschalter (32) in der zweiten Richtung (Y) befindet,
das Ladegerät (42) für den Kommutierungskondensator sich am ersten Ende (101) befindet und sich auf einer Seite des Hilfs-Lasttrennschalters (32) nahe der Stützfläche (20) befindet;
der Kommutierungskondensator (41) sich am zweiten Ende (102) befindet und sich auf einer Seite des Hilfs-Lasttrennschalters (32) nahe der Stützfläche (20) befindet und eine orthografische Projektion des Kommutierungskondensators (41) auf der Stützfläche (20) mindestens teilweise mit einer orthografischen Projektion mindestens eines des Haupt-Lasttrennschalters (31) und des Hilfs-Lasttrennschalters (32) auf der Stützfläche (20) überlappt.

3. Gleichstrom-Lasttrennschalter-Handwagen nach einem der Ansprüche 1 oder 2, wobei die Kommutierungsschalteranordnung (44) elektrisch mit dem Kommutierungsinduktor (43) bzw. dem Kommutierungskondensator (41) verbunden ist und die Kommutierungsschalteranordnung (44) eine erste Kommutierungsschalteranordnung (441) und eine zweite Kommutierungsschalteranordnung (442) umfasst,
die erste Kommutierungsschalteranordnung (441) und die zweite Kommutierungsschalteranordnung (442) elektrisch miteinander verbunden sind und sich beide auf einer Seite des Kommutierungskondensators (41) entfernt von der Stützfläche (20) befinden und die erste Kommutierungsschalteranordnung (441) und die zweite Kommutierungsschalteranordnung (441) jeweils eine integrierte Struktur aufweisen,
wobei sich in der dritten Richtung (Z) die erste Kommutierungsschalteranordnung (441) und die zweite Kommutierungsschalteranordnung (442) zwischen der Stützfläche (20) und dem ersten Kontaktarm (312) befinden und sich zwischen der Stützfläche (20) und dem zweiten Kontaktarm (322) befinden.

4. Gleichstrom-Lasttrennschalter-Handwagen nach Anspruch 3, wobei die erste Kommutierungsschalteranordnung (441) einen Kommutierungsschalter einer mittels integriertem Gate kommutierten Thyristoranordnung umfasst, die zweite Kommutierungsschalteranordnung (442) eine Kommutierungsschalter-Thyristoranordnung umfasst und die erste Kommutierungsschalteranordnung (441) mit der zweiten Kommutierungsschalteranordnung (442) in Reihe geschaltet ist.

5. Gleichstrom-Lasttrennschalter-Handwagen nach einem der Ansprüche 1-4, wobei die Abstoßungsanordnung (33) einen Abstoßungskondensator (331) und ein Ladegerät (332) für den Abstoßungskondensator umfasst, das Ladegerät (332) für den Abstoßungskondensator elektrisch mit dem Abstoßungskondensator (331) verbunden ist und das Ladegerät (332) für den Abstoßungskondensator konfiguriert ist, um den Abstoßungskondensator (331) zu laden,
wobei sich sowohl der Abstoßungskondensator (331) als auch das Ladegerät (332) für den Abstoßungskondensator am ersten Ende (101) befinden und sich auf einer Seite des Haupt-Lasttrennschalters (31) nahe dem Hilfs-Lasttrennschalter (32) in der zweiten Richtung (Y) befinden und sich das Ladegerät (332) für den Abstoßungskondensator auf einer Seite des Hilfs-Lasttrennschalters (32) nahe der Stützfläche (20) in der dritten Richtung (Z) befindet, sich der Abstoßungskondensator (331) auf einer Seite des Ladegeräts (332) für den Abstoßungskondensator entfernt von der Stützfläche (20) befindet und der Abstoßungskondensator (331) und der Hilfs-Lasttrennschalter (32) in der ersten Richtung (X) voneinander beabstandet sind.

6. Gleichstrom-Lasttrennschalter-Handwagen nach Anspruch 5, ferner umfassend eine Lasttrennschaltersteuerung, die konfiguriert ist, um Steuersignale an den Haupt-Lasttrennschalter (31) und den Hilfs-Lasttrennschalter (32) zu übertragen,
wobei sich die Lasttrennschaltersteuerung am ersten Ende (101) befindet und sich auf einer Seite des Haupt-Lasttrennschalters (31) nahe der Stützfläche (20) in der dritten Richtung (Z) befindet und sich benachbart dem Ladegerät (332) für den Abstoßungskondensator befindet und von diesem in der zweiten Richtung (Y) beabstandet ist.

7. Gleichstrom-Lasttrennschalter-Handwagen nach einem der Ansprüche 1-6, wobei das energieabsorbierende Element (50) einen Hauptableiter (51) und einen Kommutierungsschalterableiter (52) umfasst, der Hauptableiter (51) konfiguriert ist, um Systemenergie nach dem Öffnen des Haupt-Lasttrennschalters (31) zu absorbieren, um einen Spannungseinfluss auf den Haupt-Lasttrennschalter (31) zu reduzieren, der Kommutierungsschalterableiter (52) konfiguriert ist, um einen Spannungseinfluss auf die Kommutierungsschalteranordnung (44) zu reduzieren,
der Hauptableiter (51) mit dem Kommutierungsschalterableiter (52) verbunden ist, um eine integrierte Struktur zu bilden, und sich am zweiten Ende (102) und auf einer Seite des Kommutierungskondensators (41) nahe dem Haupt-Lasttrennschalter (31) in der zweiten Richtung (Y) befindet, und sich das energieabsorbierende Element (50) zwischen der Stützfläche (20) und dem Haupt-Lasttrennschalter (31) in der dritten Richtung (Z) befindet.

8. Gleichstrom-Lasttrennschalter-Handwagen nach Anspruch 7, wobei der Kommutierungskondensator (41), die Kommutierungsschalteranordnung (44) und der Kommutierungsinduktor (43) nacheinander in Reihe geschaltet sind, um einen Verbindungszweig zu bilden, und der Verbindungszweig parallel mit dem Haupt-Lasttrennschalter (31) verbunden ist,
wobei der Kommutierungsschalterableiter (52) parallel mit beiden Enden der Kommutierungsschalteranordnung (44) verbunden ist.

9. Gleichstrom-Lasttrennschalter-Handwagen nach einem der Ansprüche 7 oder 8, wobei der Hauptableiter (51) eine Vielzahl von Einheiten des Hauptableiters (51) umfasst, die elektrisch miteinander verbunden sind, die Vielzahl von Einheiten des Hauptableiters (51) in einer Anordnung in der ersten Richtung (X) und der dritten Richtung (Z) angeordnet sind, um eine Vielzahl von Reihen von Einheiten des Hauptableiters (51) und eine Vielzahl von Spalten von Einheiten des Hauptableiters (51) zu bilden,
der Kommutierungsschalterableiter (52) eine Vielzahl von Einheiten (521) des Kommutierungsschalterableiters umfasst, die elektrisch miteinander verbunden sind, die Vielzahl von Einheiten des Kommutierungsschalterableiters (52) sich auf einer Seite der Vielzahl von Einheiten des Hauptableiters (51) entfernt von dem Haupt-Lasttrennschalter (31) befinden und die Vielzahl von Einheiten (521) des Kommutierungsschalterableiters in der dritten Richtung (Z) angeordnet sind, um eine Vielzahl von Spalten von Einheiten des Kommutierungsschalterableiters zu bilden.

10. Gleichstrom-Lasttrennschalter-Handwagen nach einem der Ansprüche 3 oder 4, wobei in der dritten Richtung (Z) eine orthografische Projektion der zweiten Kommutierungsschalteranordnung (442) auf der Stützfläche (20) die Form eines "I" hat.

11. Gleichstrom-Lasttrennschalter-Handwagen nach einem der Ansprüche 1-10, ferner umfassend: ein bewegliches Teil (70), das sich auf einer Seite der Stützfläche (20) entfernt von dem stromführenden Element (30), dem Kommutierungselement (40) und dem energieabsorbierenden Element (50) befindet, wobei das bewegliche Teil (70) konfiguriert ist, um den Stützrahmen (10) zur Bewegung anzutreiben.

12. Gleichstrom-Lasttrennschalter-Handwagen nach Anspruch 11, ferner umfassend eine Bewegungssteuervorrichtung (80), wobei die Bewegungssteuervorrichtung (80) mit dem Stützrahmen (10) verbunden ist und konfiguriert ist, um das bewegliche Teil (70) zu steuern, um den Stützrahmen (10) zur Bewegung anzutreiben,
wobei sich die Bewegungssteuervorrichtung (80) am ersten Ende (101) befindet und sich auf einer Seite des Haupt-Lasttrennschalters (31) entfernt vom zweiten Ende (102) in einer ersten Richtung (X) befindet.

13. Gleichstrom-Lasttrennschalter-Handwagen nach Anspruch 1, wobei der Stützrahmen (10) ferner mindestens zwei Stützträger (90) umfasst, wobei die mindestens zwei Stützträger (90) mit der Stützfläche (20) verbunden sind;
der Gleichstrom-Lasttrennschalter-Handwagen ferner einen Heberahmen umfasst und der Heberahmen lösbar mit den mindestens zwei Stützträgern (90) verbunden ist.

14. Gleichstrom-Lasttrennschalter-Handwagen nach einem der Ansprüche 1-13, wobei
sich der Kommutierungsinduktor (43) auf einer Seite des Ladegeräts (42) für den Kommutierungskondensator entfernt von der Stützfläche (20) in der dritten Richtung (Z) befindet und sich zwischen dem Haupt-Lasttrennschalter (31) und dem Hilfs-Lasttrennschalter (32) in der zweiten Richtung (Y) befindet;
der Gleichstrom-Lasttrennschalter-Handwagen ferner einen Isolationstransformator (55) umfasst, wobei der Isolationstransformator (55) elektrisch mit der Kommutierungsschalteranordnung (44) verbunden ist und sich auf einer Seite des Kommutierungskondensators (41) entfernt von der Stützfläche (20) befindet und sich benachbart der Kommutierungsschalteranordnung (44) befindet und von dieser beabstandet ist.

15. Gleichstromschaltervorrichtung, umfassend den Gleichstrom-Lasttrennschalter-Handwagen nach einem der Ansprüche 1-14 und einen Gleichstromschalterschrank (023),
wobei der Gleichstromschalterschrank (023) einen ersten statischen Kontakt und einen zweiten statischen Kontakt umfasst, wobei der erste statische Kontakt konfiguriert ist, um lösbar mit dem Haupt-Lasttrennschalter (31) verbunden zu werden, und der zweite statische Kontakt konfiguriert ist, um lösbar mit dem Hilfs-Lasttrennschalter (32) verbunden zu werden.

## Revendications

1. Chariot de disjoncteur à courant continu, comprenant :
un châssis de support (10), comprenant une surface de support (20) ;
un élément conducteur de courant (30), situé sur la surface de support (20) et comprenant un disjoncteur principal (31) et un disjoncteur auxiliaire (32) qui sont connectés électriquement l'un à l'autre ;
un élément de commutation (40), situé sur la surface de support (20), connecté électriquement à l'élément conducteur de courant (30) et comprenant un condensateur de commutation (41), une inductance de commutation (43), un ensemble interrupteur de commutation (44) et un chargeur de condensateur de commutation (41) qui sont connectés électriquement les uns aux autres ;
un ensemble répulsif (33), configuré pour commander l'ouverture et la coupure du disjoncteur principal (31) ; et
un élément d'absorption d'énergie (50), situé sur la surface de support (20) et connecté électriquement à l'élément conducteur de courant (30) et à l'élément de commutation (40), respectivement ;
dans lequel le châssis de support (10) comprend une première extrémité (101) et une deuxième extrémité (102) qui sont opposées dans une première direction (X), et le disjoncteur principal (31) et le disjoncteur auxiliaire (32) sont situés à la première extrémité (101) et sont espacés l'un de l'autre dans une deuxième direction (Y), la première direction (X) et la deuxième direction (Y) sont parallèles à la surface de support (20) et la première direction (X) est perpendiculaire à la deuxième direction (Y),
le disjoncteur principal (31) comprend un interrupteur principal (311) et un premier bras de contact (312), le disjoncteur auxiliaire (32) comprend un interrupteur auxiliaire (321) et un deuxième bras de contact (322), et le premier bras de contact (312) et le deuxième bras de contact (322) s'étendent tous deux dans la première direction (X) et dans une direction allant de la première extrémité (101) à la deuxième extrémité (102),
dans lequel une extrémité du premier bras de contact (312) proche de la première extrémité (101) est connectée à une extrémité de l'interrupteur principal (311), et une extrémité du deuxième bras de contact (322) proche de la première extrémité (101) est connectée à une extrémité de l'interrupteur auxiliaire (321), l'autre extrémité de l'interrupteur principal (311) est connectée électriquement à l'autre extrémité de l'interrupteur auxiliaire (321) par l'intermédiaire d'un élément conducteur (45), et le premier bras de contact (312) et le deuxième bras de contact (322) sont tous deux plus éloignés de la surface de support (20) dans une troisième direction (Z) que l'élément conducteur (45), la troisième direction (Z) est perpendiculaire à la première direction (X) et la troisième direction (Z) est perpendiculaire à la deuxième direction (Y).

2. Chariot de disjoncteur à courant continu selon la revendication 1, dans lequel le condensateur de commutation (41) est connecté électriquement au chargeur de condensateur de commutation (42) et est situé sur un côté du disjoncteur principal (31) proche du disjoncteur auxiliaire (32) dans la deuxième direction (Y),
le chargeur de condensateur de commutation (42) est situé à la première extrémité (101) et est situé sur un côté du disjoncteur auxiliaire (32) proche de la surface de support (20) ;
le condensateur de commutation (41) est situé à la deuxième extrémité (102) et est situé sur un côté du disjoncteur auxiliaire (32) proche de la surface de support (20), et une projection orthographique du condensateur de commutation (41) sur la surface de support (20) recouvre au moins partiellement une projection orthographique d'au moins l'un parmi le disjoncteur principal (31) et le disjoncteur auxiliaire (32) sur la surface de support (20).

3. Chariot de disjoncteur à courant continu selon la revendication 1 ou 2, dans lequel l'ensemble interrupteur de commutation (44) est connecté électriquement à l'inductance de commutation (43) et au condensateur de commutation (41), respectivement, et l'ensemble interrupteur de commutation (44) comprend un premier ensemble interrupteur de commutation (441) et un deuxième ensemble interrupteur de commutation (442),
le premier ensemble interrupteur de commutation (441) et le deuxième ensemble interrupteur de commutation (442) sont connectés électriquement l'un à l'autre et sont tous deux situés sur un côté du condensateur de commutation (41) éloigné de la surface de support (20), et le premier ensemble interrupteur de commutation (441) et le deuxième ensemble interrupteur de commutation (441) sont chacun d'une structure intégrée,
dans lequel, dans la troisième direction (Z), le premier ensemble interrupteur de commutation (441) et le deuxième ensemble interrupteur de commutation (442) sont situés entre la surface de support (20) et le premier bras de contact (312), et sont situés entre la surface de support (20) et le deuxième bras de contact (322).

4. Chariot de disjoncteur à courant continu selon la revendication 3, dans lequel le premier ensemble interrupteur de commutation (441) comprend un interrupteur de commutation d'un ensemble thyristor à commutation de grille intégré, le deuxième ensemble interrupteur de commutation (442) comprend un ensemble thyristor d'interrupteur de commutation, et le premier ensemble interrupteur de commutation (441) est connecté en série avec le deuxième ensemble interrupteur de commutation (442).

5. Chariot de disjoncteur à courant continu selon l'une quelconque des revendications 1 à 4, dans lequel l'ensemble répulsif (33) comprend un condensateur répulsif (331) et un chargeur de condensateur répulsif (332), le chargeur de condensateur répulsif (332) est connecté électriquement au condensateur répulsif (331) et le chargeur de condensateur répulsif (332) est configuré pour charger le condensateur répulsif (331),
dans lequel le condensateur répulsif (331) et le chargeur de condensateur répulsif (332) sont tous deux situés à la première extrémité (101) et sont situés sur un côté du disjoncteur principal (31) proche du disjoncteur auxiliaire (32) dans la deuxième direction (Y), et le chargeur de condensateur répulsif (332) est situé sur un côté du disjoncteur auxiliaire (32) proche de la surface de support (20) dans la troisième direction (Z), le condensateur répulsif (331) est situé sur un côté du chargeur de condensateur répulsif (332) éloigné de la surface de support (20), et le condensateur répulsif (331) et le disjoncteur auxiliaire (32) sont espacés l'un de l'autre dans la première direction (X).

6. Chariot de disjoncteur à courant continu selon la revendication 5, comprenant en outre un dispositif de commande de disjoncteur, configuré pour transmettre des signaux de commande au disjoncteur principal (31) et au disjoncteur auxiliaire (32),
dans lequel le dispositif de commande de disjoncteur est situé à la première extrémité (101) et est situé sur un côté du disjoncteur principal (31) proche de la surface de support (20) dans la troisième direction (Z), et est adjacent et espacé du chargeur de condensateur répulsif (332) dans la deuxième direction (Y).

7. Chariot de disjoncteur à courant continu selon l'une quelconque des revendications 1 à 6, dans lequel l'élément d'absorption d'énergie (50) comprend un parasurtenseur principal (51) et un parasurtenseur d'interrupteur de commutation (52), le parasurtenseur principal (51) est configuré pour absorber l'énergie du système après l'ouverture du disjoncteur principal (31) afin de réduire l'impact de la tension sur le disjoncteur principal (31), le parasurtenseur d'interrupteur de commutation (52) est configuré pour réduire l'impact de la tension sur l'ensemble interrupteur de commutation (44),
le parasurtenseur principal (51) est connecté au parasurtenseur d'interrupteur de commutation (52) pour former une structure intégrée, et est situé à la deuxième extrémité (102) et sur un côté du condensateur de commutation (41) proche du disjoncteur principal (31) dans la deuxième direction (Y), l'élément d'absorption d'énergie (50) est situé entre la surface de support (20) et le disjoncteur principal (31) dans la troisième direction (Z).

8. Chariot de disjoncteur à courant continu selon la revendication 7, dans lequel le condensateur de commutation (41), l'ensemble interrupteur de commutation (44) et l'inductance de commutation (43) sont connectés en série de manière séquentielle pour former une branche de connexion, et la branche de connexion est connectée en parallèle avec le disjoncteur principal (31),
dans lequel le parasurtenseur d'interrupteur de commutation (52) est connecté en parallèle aux deux extrémités de l'ensemble interrupteur de commutation (44).

9. Chariot de disjoncteur à courant continu selon la revendication 7 ou 8, dans lequel le parasurtenseur principal (51) comprend une pluralité d'unités de parasurtenseur principal (51) connectées électriquement les unes aux autres, la pluralité d'unités de parasurtenseur principal (51) sont agencées en réseau dans la première direction (X) et la troisième direction (Z) pour former une pluralité de rangées d'unités de parasurtenseur principal (51) et une pluralité de colonnes d'unités de parasurtenseur principal (51) ;
le parasurtenseur d'interrupteur de commutation (52) comprend une pluralité d'unités de parasurtenseur d'interrupteur de commutation (521) connectées électriquement les unes aux autres, la pluralité d'unités de parasurtenseur d'interrupteur de commutation (52) sont situées sur un côté de la pluralité d'unités de parasurtenseur principal (51) éloigné du disjoncteur principal (31), et la pluralité d'unités de parasurtenseur d'interrupteur de commutation (521) sont agencées dans la troisième direction (Z) pour former une pluralité de colonnes d'unités de parasurtenseur d'interrupteur de commutation.

10. Chariot de disjoncteur à courant continu selon la revendication 3 ou 4, dans lequel, dans la troisième direction (Z), une projection orthographique du deuxième ensemble interrupteur de commutation (442) sur la surface de support (20) a la forme d'un « I ».

11. Chariot de disjoncteur à courant continu selon l'une quelconque des revendications 1 à 10, comprenant en outre : une partie mobile (70), située sur un côté de la surface de support (20) éloigné de l'élément conducteur de courant (30), de l'élément de commutation (40) et de l'élément d'absorption d'énergie (50), dans lequel la partie mobile (70) est configurée pour entraîner le châssis de support (10) en mouvement.

12. Chariot de disjoncteur à courant continu selon la revendication 11, comprenant en outre un dispositif de commande de mouvement (80), dans lequel le dispositif de commande de mouvement (80) est connecté au châssis de support (10) et est configuré pour commander la partie mobile (70) de manière à entraîner le châssis de support (10) en mouvement,
dans lequel le dispositif de commande de mouvement (80) est situé à la première extrémité (101) et est situé sur un côté du disjoncteur principal (31) éloigné de la deuxième extrémité (102) dans une première direction (X).

13. Chariot de disjoncteur à courant continu selon la revendication 1, dans lequel le châssis de support (10) comprend en outre au moins deux poutres de support (90), lesdites au moins deux poutres de support (90) sont connectées à la surface de support (20) ;
le chariot de disjoncteur à courant continu comprend en outre un châssis de levage, et le châssis de levage est connecté de manière amovible auxdites au moins deux poutres de support (90).

14. Chariot de disjoncteur à courant continu selon l'une quelconque des revendications 1 à 13, dans lequel
l'inductance de commutation (43) est située sur un côté du chargeur de condensateur de commutation (42) éloigné de la surface de support (20) dans la troisième direction (Z) et est située entre le disjoncteur principal (31) et le disjoncteur auxiliaire (32) dans la deuxième direction (Y) ;
le chariot de disjoncteur à courant continu comprend en outre un transformateur d'isolement (55), le transformateur d'isolement (55) est connecté électriquement à l'ensemble interrupteur de commutation (44) et est situé sur un côté du condensateur de commutation (41) éloigné de la surface de support (20) et est adjacent à l'ensemble interrupteur de commutation (44) en étant espacé de celui-ci.

15. Appareil de commutation à courant continu, comprenant le chariot de disjoncteur à courant continu selon l'une quelconque des revendications 1 à 14, et une armoire de commutation à courant continu (023),
dans lequel l'armoire de commutation à courant continu (023) comprend un premier contact statique et un deuxième contact statique, le premier contact statique est configuré pour être connecté de manière amovible au disjoncteur principal (31) et le deuxième contact statique est configuré pour être connecté de manière amovible au disjoncteur auxiliaire (32).
